Europäisches Patentamt

European Patent Office

Office européen des brevets

(11) Publication number: **0 070 662**
A1

(12) # EUROPEAN PATENT APPLICATION

(21) Application number: **82303627.2**

(22) Date of filing: **09.07.82**

(51) Int. Cl.³: **F 16 H 41/26, F 16 H 45/02**

---

(30) · Priority: **20.07.81 US 285227**

(43) Date of publication of application: **26.01.83**
Bulletin **83/4**

(84) Designated Contracting States: **DE FR GB IT**

(71) Applicant: **BORG-WARNER CORPORATION, 200 South Michigan Avenue, Chicago Illinois 60604 (US)**

(72) Inventor: **Schulz, Willis L., 1301 Mallard Drive, Englewood Florida 33533 (US)**

(74) Representative: **Williams, Trevor John et al, J.A. KEMP & CO. 14 South Square Gray's Inn, London WC1R 5EU (GB)**

---

(54) **Small torus hydraulic torque converter with lock-up clutch.**

(57) A three-element hydraulic torque converter (10) includes a torus which is of conventional configuration but which is dimensionally small relative to its outer radius ($R_o$). By increasing the inner radius ($R_i$) of the torus, the starting torque multiplication factor is improved. In addition, the increased inner radius provides room inboard of the torus for placement of the torsional vibration damper (40) of an associated lock-up clutch (36).

## Small Torus Hydraulic Torque Converter With Lock-up Clutch

## Description

This invention relates generally to a hydrodynamic power transmitting device useful with a mechanical coupling. More particularly, it relates to a hydraulic torque converter with a lock-up clutch, wherein the converter torus is dimensionally small but of conventional configuration, and wherein the associated lock-up clutch includes a torsional vibration damper oriented substantially inboard of the torus.

In recent years, considerable effort has been expended to downsize and improve the efficiency of automotive vehicles. In instances where an automotive vehicle incorporates an automatic transmission, it is known that torque converter efficiency is improved with the use of a lock-up clutch. U.S. Patent 3,001,415 issued September 26, 1961 and U.S. Patent 3,185,273 issued May 25, 1965 disclose conventional torque converters in association with lock-up clutches. However, in each instance the combined axial length of the converter torus and lock-up clutch increases significantly the overall axial length of the torque converter. This is undesirable for use in a small vehicle.

U. S. Patent 4,044,556 issued August 30, 1977 discloses a torque converter including a torus having a pear-shaped configuration in association with a lock-up clutch. Although this arrangement reduces somewhat the overall axial length of the torque converter, the particular torus configuration causes variation in the rate of fluid flow therein. This introduces losses into the system, and results in reduced converter operating efficiency.

There remains a need in the art for a torque converter including a torus which will afford high operating efficiency. Further, when the torus is used in association with a lock-up clutch, they should be so arranged as to minimize the overall axial length of the torque converter.

This invention is directed to a torque converter which will meet the needs noted above. To that end, there is provided a hydraulic torque converter with an input including an impeller, an output including a turbine and a reaction member including a stator. The impeller, turbine and stator define a small torus of conventional configuration but of reduced dimensional relationships relative to its outer radius. This places the torus farther from the converter axis than heretofore had been considered desirable. With such an arrangement, an improvement in the starting torque multiplication factor is obtained. In addition, this arrangement provides space inboard of the torus for placement of the damper of an associated lock-up clutch. As a result, the combined axial length of the torus and lock-up clutch is reduced over that shown in the prior art.

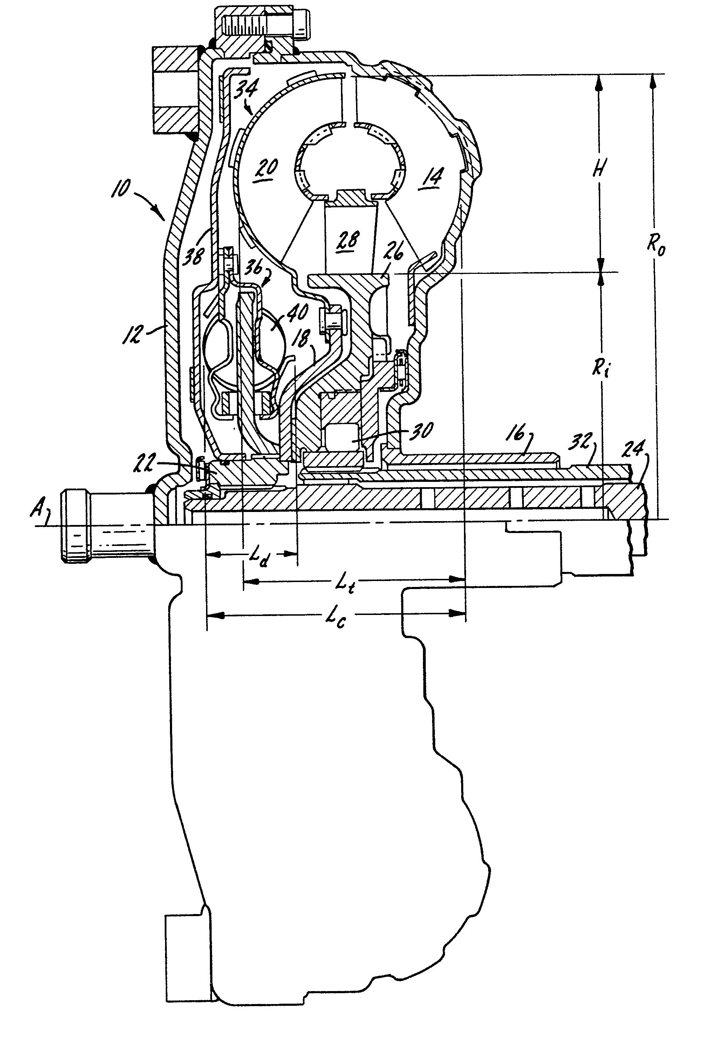

The objects and advantages of this invention will become apparent to those skilled in the art upon careful consideration of the specification herein, including the drawing, which is a sectional view showing details of the torque converter, lock-up clutch and damper.

While this invention is susceptible of embodiment in many different forms, a preferred embodiment is shown in the drawing and described in detail. It should be understood that the present disclosure is considered to be an exemplification of the principles of the invention, and is not intended to limit the invention to this embodiment.

Referring to the drawing in greater detail, a three-element hydraulic torque converter assembly 10 is supported for rotation on an axis A. Converter assembly 10 includes an input member 12 adapted for driven engagement with an associated automotive engine. Input member 12 forms a converter housing which supports an impeller 14, and which includes a quill 16 adapted for driving engagement with the oil pump (not shown) of an associated transmission.

An output member 18 supports a turbine 20. Output member 18 is secured to a hub 22 which in turn is secured to an output shaft 24. Shaft 24 may be the input shaft of an associated transmission.

A reaction member 26 supports a stator 28. Reaction member 26 is coupled through a one-way clutch 30 with a quill 32. Quill 32 may be grounded to the case of an associated transmission.

Impeller 14, turbine 20 and stator 28 together define a torus 34 of conventional configuration so as to maintain, for all practical purposes, a constant rate of fluid flow therein. Torus 34 has an outer radius $R_o$ and an inner radius $R_i$, both measured from the torus to axis A, a radial height H equal to $R_o$ minus $R_i$, and an axial length $L_t$ measured parallel to axis A.

The dimensional relationship of $R_i$ to $R_o$ is unique as compared with the prior art. $R_i$ is equal to at least one-half $R_o$ and preferably is greater than one-half $R_o$. In other words, in a preferred form of the invention $R_i$ is equal to or greater than H. With $R_i$ relatively large, torus 34 is dimensionally smaller, as related to $R_o$, than what heretofore had been considered desirable. The dimensional relationship of H to $L_t$ is conventional.

A torque converter with a small torus of conventional configuration has been constructed in accordance with this invention such that $R_i$ equals approximately 0.56 $R_o$, $L_t$ equals approximately 0.50 $R_o$ and H equals aproximately 0.88 $L_t$. Slight variations from these relationships may produce acceptable operation.

Tests of a torque converter with a small torus, having the just-described relationships, show the attainment of a starting torque multiplication factor of approximately 2.3. This compares favorably with a factor of 2.0 which heretofore has been considered satisfactory.

Torque converter assembly 10 also includes a lock-up clutch assembly 36. Assembly 36 includes a fluid-actuated clutch 38 adapted for engagement with input member 12. Assembly 36 also includes a torsional vibration damper 40 which couples clutch 38 through hub 22 with output shaft 24. Damper 40 has an axial length $L_d$. U.S. Patent 4,232,534 issued November 11, 1980 discloses a damper which may be suitable for use in assembly 36.

The extension of $R_i$ provides increased space between axis A and torus 34. This affords room for placement of damper 40 substantially fully inboard of torus 34; that is, substantially fully between axis A and stator 28. This also allows placement of damper 40 in such a position that substantially one-half or more of its axial length $L_d$ overlaps the axial length $L_t$ of torus 34. As a result, the combined axial length $L_c$ of torus 34 and damper 40 is reduced. Indeed, $L_c$ is less than $L_t$ plus approximately one-half $L_d$. As a result, the overall axial length of converter 10 is shortened, which is consistent with the requirements of modern vehicles.

It is not intended that the present invention be restricted in its application to an automotive environment. It is contemplated that the invention will be utilized in a wide variety of other applications.

# CLAIMS

1. A hydraulic torque converter (10) having an axis (A), said converter comprising input means (12) including an impeller (14), output means (18) including a turbine (20), and reaction means (26) including a stator (28), said impeller, turbine and stator defining a torus (34) having an inner radius $(R_i)$ measured from said axis to the nearest point of the torus, an outer radius $(R_o)$ measured from said axis to the farthest point of the torus, a radial height (H) measured between said points, and an axial length $(L_t)$ measured parallel to said axis, the ratio of said inner radius $(R_i)$ to said outer radius $(R_o)$ being at least 0.50 to 1.

2. The converter of claim 1, wherein the ratio of said inner radius $(R_i)$ to said outer radius $(R_o)$ is greater than 0.50 to 1.

3. The converter of claim 1, wherein the ratio of said radial height (H) to said axial length $(L_t)$ is not greater than 1 to 1.

4. The converter of claim 2, wherein the ratio of said radial height (H) to said axial length $(L_t)$ is less than 1 to 1.

5. The converter of claim 2, wherein the ratio of said inner radius $(R_i)$ to said outer radius $(R_o)$ is approximately 0.56 to 1, and the ratio of said radial height (H) to said outer radius $(R_o)$ is approximately 0.44 to 1.

6. The converter of claim 2, wherein the ratio of said axial length ($L_t$) to said outer radius ($R_o$) is approximately 0.50 to 1, and the ratio of said radial height (H) to said axial length ($L_t$) is approximately 0.88 to 1.

7. The converter of claim 5, wherein the ratio of said axial length ($L_t$) to said outer radius ($R_o$) is approximately 0.50 to 1, and the ratio of said radial height (H) to said axial length ($L_t$) is approximately 0.88 to 1.

8. The converter of claim 1, 2, 3, 4, 5, 6 or 7, said converter (10) further comprising lock-up clutch means (36) including a damper (40) substantially fully inboard of said torus.

9. The converter of claim 1, 2, 3, 4, 5, 6 or 7, said converter (10) further comprising lock-up clutch means (36) including a damper (40) having an axial length ($L_d$), the combined axial length ($L_c$) said torus and damper being less than the axial length ($L_t$) of said torus plus approximately one-half the axial length ($L_d$) of said damper.

10. The converter of claim 1, 2, 3, 4, 5, 6 or 7, said converter (10) further comprising lock-up clutch means (36) including a damper (40) substantially fully inboard of said torus (34), said damper (40) having an axial length ($L_d$), the combined axial length ($L_c$) said torus and damper being less than the axial length ($L_t$) of said torus plus approximately one-half the axial length ($L_d$) of said damper.

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| Y | US − A − 3 503 209 (H. LOFFELHOLZ)<br>* claim 1; fig. 1 *<br>−− | 1,2,6 | F 16 H 41/26<br>F 16 H 45/02 |
| Y | DE − B − 1 265 520 (ELEKTRO MECHANIK GMBH)<br>* claim; fig. *<br>−− | 1,2,6 | |
| A | GB − A − 2 017 835 (NISSAN MOTOR CO.)<br>* claim 1; fig. 1 *<br>−− | 8 | **TECHNICAL FIELDS SEARCHED (Int.Cl. 3)** |
| D,A | US − A − 4 044 556 (K. KURAMOCHI et al.)<br>−− | | F 16 H 41/00<br>F 16 H 45/00 |
| A | GB − A − 1 131 935 (S.A. FRANÇAISE DU FERUDO)<br>−−−− | | |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | | |
|---|---|---|---|
| Place of search | Date of completion of the search | Examiner | |
| Berlin | 08−10−1982 | LEMBLE | |

EPO Form 1503.1   06.78